(19) **Europäisches Patentamt**

**European Patent Office**

**Office européen des brevets**

(11) Veröffentlichungsnummer: **0 410 209 A2**

## (12) EUROPÄISCHE PATENTANMELDUNG

(21) Anmeldenummer: **90113230.8**

(22) Anmeldetag: **11.07.90**

(51) Int. Cl.⁵: **F16C 33/60**

(30) Priorität: **26.07.89 IT 2132989**

(43) Veröffentlichungstag der Anmeldung:
**30.01.91 Patentblatt 91/05**

(84) Benannte Vertragsstaaten:
**AT BE CH DE DK ES FR GB GR IT LI LU NL SE**

(71) Anmelder: **Mazzoni, Ermenegildo**
**Via Faschini 10**
**I-28026 Omegna (Novara)(IT)**

Anmelder: **Manzoli, Cesare**
**Via Filippino Lippi 12**
**I-20131 Milano(IT)**

(72) Erfinder: **Mazzoni, Ermenegildo**
**Via Fraschini 10**
**I-28026 Omegna(IT)**

(74) Vertreter: **Mayer, Hans Benno, Dipl.-Ing.**
**de Dominicis & Mayer Piazzale Marengo 6o 6**
**I-20121 Milano(IT)**

(54) **Spurring, insbesondere zur Aufnahme von hohen Axialbelastungen.**

㊼ Spurring zur Aufnahme von hohen Axialbelastungen, bestehend aus zwei, aus einstueckigem Blech gepressten Ringen, mit sich gegenueberliegenden Radialflanschen zur Aufnahme eines Kugelkranzes, bestehend aus tragenden Waelzkoerpern.

FIG. 3

EP 0 410 209 A2

## SPURRING, INSBESONDERE ZUR AUFNAHME VON HOHEN AXIALBELASTUNGEN

Die Erfindung betrifft einen Spurring, besonders einen Spurring zur Aufnahme hohrer Axialbelastungen. Wie aus dem Stand der Technik bekannt ist, bestehen Spurringe ueblicherweise aus L-foermig ausgebildeten Ringen, die sich gegenueberliegend angeordnet sind und an ihren senkrechten Seitenflaechen je eine Ringnut aufweisen. Die Ringnuten liegen sich bei montierten Ringen gegenueber und dienen zur Aufnahme eines Kugelkranzes. Jeder Ring wird dadurch hergestellt, dass ein profiliertes Bauteil zu einem Ring gebogen wird und an den Stoessen, z.B. durch Schweissverbindung, geschlossen wird.

Im Anschluss daran wird in die Ringe eine Umfangsnut eingearbeitet, z.B. durch einen Walzvorganges oder einen Drehvorgang.

Das Mittelteil zwischen den beiden Ringen besteht aus einem Kugelkranz. Nach gegenseitiger Lageanordnung der bekannten Laufringe werden in die sioh gegenueberliegenden Nuten ueber eine Bohrung einzelne Laufkugeln eingebracht. Nach Einfuehren der Kugeln zur Bildung eines Kugelkranzes ist die Bohrung zu verschliessen. Der so erstellte Spurring kann nun montiert werden (z.B. mittels Schrauben, Schweissverbindungen oder aehnlichen Verbindungsmitteln) indem er zwischen zwei drehbar zueinander angeordneten Bauteilen, z.B. dem Gehaeuse eines landwirtschaftlichen Geraetes und der Zugdeichsel des Geraetes eingebracht wird. Neben der Anwendung fuer landwirtschaftliche Fahreuge, Anhaenger oder aehnliche Geraete werden die beschriebenen Spurringe zunehmend fuer Maschinen und Industrieanlagen eingesetzt, z.B. fuer drehbare Montagestationen.

Aufgrund der eingesetzten Konstruktion besteht bei den bekannten Spurringen nur die Moeglichkeit, groessere radiale Belastungen und weniger hohe Axialbelastungen aufzunehmen. Diese werden lediglich von den Laufkugeln aufgenommen, d.h. die Kraftuebertragung erfolgt nur durch einen begrenzten, kugelfoermigen unteren Abschnitt der Laufkugeln. Bei den meisten Anwendungsfaellen dieser Spurringe muessen aber oefters auch sehr hohe Axialbelastungen aufgenommen werden. Bei den bekannten Spurringen sind daher Ueberdimensionierungen und der Einsatz von Werkstoffen mit erheblicher Materialdicke notwendig.

Ein weiterer Nachteil der bekannten Spurringe ist in ihrer Fertigung zu sehen. Fuer die Herstellung der bekannten Spurringe sind zahlreiche Arbeitsgaenge notwendig, die auf verschiedenen Maschinen durchzufuehren sind. Das Einfuellen der Kugeln zur Bildung eines Kugelkranzes stellt einen zeitraubenden Vorgang dar, der von Hand durchzufuehren ist. Dies bringt lange Fertigungs- und Montagezeiten mit sich und demzufolge auoh hohe Fertigungskosten.

Aufgabe der vorstehenden Erfindung ist es einen Spurring vorzuschlagen, der einfach und rasch gefertigt werden kann und ein bequemes und schnelles Einsetzen des Kugelkranzes erlaubt und es ermoeglicht, hohe Axialkraefte bei bescheidener Dimensionierung der Bauteile des Spurringes zu uebertragen.

Es ist weiterhin Aufgabe der vorstehenden Erfindung, einen aus Teilringen gebildeten Spurring zu schaffen, der genaue Laufnuten aufweist, was zu einem ruhigen, sehr genauen und vibrationsfreien Lauf der Spurringe fuehrt.

Die erfingungsgemaesse Aufgabe wird mit einem aus zwei profilierten, sich gegenueberliegenden Ringen bestehenden Spurring mit dazwischen gefuegtem Kugelkranz dadurch erzielt, dass die profilierten Ringe aus einstueckig verformtem Blech bestehen, die an ihrem, sich in Arbeitsstellung gegenueberliegendem Rand einen radial in Umfangsrichtung abstehenden Flansch aufweisen, der eine Nut zur Aufnahme eines Kugelkranzes bildet, wobei die Nuten in Arbeitslage der Ringe sich gegenueberliegend angeordnet sind, und dass Mittel zum formschluessigen Verbinden der freien Raender der Flansche vorgesehen sind.

Weitere Merkmale der vorstehenden Erfindung koennen den Unteranspruechen und der folgenden Beschreibung entnommen werden.

Mit dem erfindungsgemaessen Spurring koennen wesentliche Vorteile erzielt werden. Die Herstellung der einzelnen, einstueckig ausgebildeten Ringe durch einen Press- oder Stanzvorgang ist einfach und genau, es wird von einem einfachen Blechteil ausgegangen. Die profilierten Ringe koennen unter Verwendung einer einzigen Pressform hergestellt werden. Daher wird groesstmoegliche Genauigkeit fuer die Fertigung der Nuten zur Aufnahme des Kugelkranzes erzielt. Die Montage der beiden Ringe ist ausgesprochen einfach und schnell durchfuehrbar, der gesamte Kugelkranz wird in eine frei zugaengliche Nut des unteren Ringes eingesetzt. Nach Einfuehren des Kugelkranzes wird der obere Ring mit Selbstzentrierung aufgesetzt. Die Gleitverbindung zwischen den zwei Flanschen erfolgt in einfachster Weise durch Umbiegen oder Boerdeln des aeusseren Randes eines Flansches um die Aussenkante des verbleibenden Flansches. In der Ueberlagerungszone der zwei Raender ist es moeglich, einen zusaetzlichen Kugelkranz einzufuehren. Es besteht dadurch die Moeglichkeit, auch besonders hohe Radialkraefte sicher aufzunehmen. Die erfindungsgemaessen Spurringe sind durch einen einzigen Press- oder Stanzvorgang herstellbar. Durch einen Biege- oder Boerdelvorgang (nach Einsetzen des Kugelkranzes) ist der Laufring fertiggestellt.

Der erfindungsgemaesse Spurring kann sehr hohe Axialkraefte aufnehmen. Die Drehbewegung zwischen den beiden Ringen ist praezise und laufruhig, es treten keine unerwuenschten Schwingungen auf. Dies ermoeglicht den Einsatz des vorgeschlagenen Spurringes auch in Praezisionsgeraeten. Die Fertigungskosten sind sehr niedrig.

Weitere Merkmale, Vorteile und Ausfuehrungsformen des erfindungsgemaessen Spurringes koennen der folgenden Beschreibung und den beigefuegten Zeichnungen entnommen werden.

In den Zeichnungen zeigen:
Fig. 1 einen Schnitt durch einen bekannten Spurring; und
Fig. 2 und 3 einen Schnitt durch zwei Ausfuehrungsbeispiele des erfindungsgemaessen Spurringes. Der Aufbau des bekannten Spurringes gemaess Fig. 1 ist in der Einleitung der Beschreibung gewuerdigt worden.

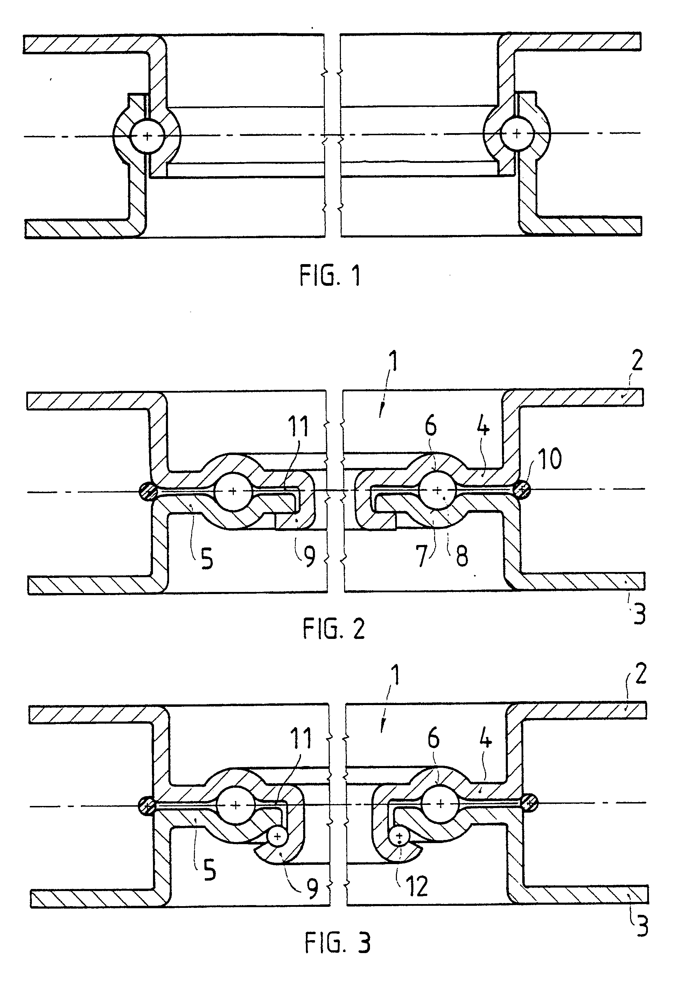

Es wird im Anschluss hauptsaechlich auf den in Fig. 2 dargestellten Spurring, der gesamthaft mit 1 gekennzeichnet ist, Bezug genommen.

Der Spurring 1 besteht aus zwei profilierten Ringen 2 und 3, die einstueckig durch einen Pressvorgang aus einem Blech mit geeigneter Dicke hergestellt werden. Wie der Fig. 2 zu entnehmen ist, weisen die Ringe 2 und 3 im Schnitt im wesentlichen L-foermige Gestalt auf. Von den Ringen 2, 3 steht je ein Umfangsflasch 4, 5 ab, der radial nach innen gerichtet ist. In die Flansche 4, 5, die senkrecht zur Mittelachse des Spurringes 1 ausgerichtet sind, ist eine Nut 6, 7 eingearbeitet. Die Nuten sind in Arbeitslage des Spurringes gegenueberliegend angeordnet und bilden eine ringfoermige Aufnahmekammer fuer einen tragenden Kugelkranz 8.

Die notwendige Verbindung zwischen den beiden Ringen 2 und 3 wird im dargestellten Beispiel dadurch erzielt, dass durch Umbiegen oder Boerdeln des Aussenrandes 9 eines Flansches 4 um den Aussenrand des verbleibenden Flansches 5 eine formschluessige Verbindung geschaffen wird. Zur Durchfuehrung dieses Boerdelvorganges ist es nur notwendig, den Flansch 4 mit groesserem Durchmesser gegenueber dem Durchmesser des Flansches 5 vorzusehen. Der Blechring fuer den Spurring 1 hat also einen Durchmesser, der vom Durchmesser des zweiten Ringes abweicht; die aeusseren Durchmesser der zwei Ringe koennen gleich ausgebildet sein. Der Fig. 2 kann entnommen werden, dass unabhaengig vom kleineren Innendurchmesser des Flansches fuer den Ring 2 gegenueber dem Innendurchmesser des Flansches des Ringes 3, die beiden Ringe 2 und 3 genau gleiche Form aufweisen. Somit koennen diese Ringe in ein und derselben Stanzform hergetellt werden.

Mit 10 ist eine Ringdichtung gekennzeichnet, die dazu vorgesehen ist, das Auslaufen von Schmierfett aus dem schmalen Schlitz 11, der zwischen den Flanschen 4 und 5 gebildet ist, zu vermeiden. Ferner dient der Dichtungsring auch dazu, Schmutzeintritt in den Schlitz 11 zu vermeiden. Die Bauteile fuer den Spurring nach Fig. 1 werden mit einem einzigen Stanzvorgang fuer die einstueokig ausgebildeten Ringe 2 und 3 hergestellt. In einem anschliessenden Biege-oder Boerdelvorgang wird der abstehende Rand eines Flansches um den Rand des verbleibenden Flansches gebogen. Das Einfuellen der Kugeln 8 erfolgt durch einfaches Einlegen des Kugelkranzes in die Nut 7 des unteren Ringes 3. Nach Einfuellen der Kugeln erfolgt ein selbstzentrierendes Auflegen des oberen Ringes, anschliessend wird der beschriebene Boerdelvorgang vorgenommen.

Der in Fig. 3 dargestellte Laufring unterscheidet sich von dem Ausfuehrungsbeispiel nach Fig. 2 dadurch, dass in der Ueberlappungszone des inneren Randes 9 des oberen Flansches 4 und dem inneren Rand des unteren Flansches 5 ein aus Waelzkoerpern 12 bestehender zusaetzlicher Kugelkranz angeordnet ist.

Alternativ zur Vorsehung des aus kleineren Kugeln bestehenden Kugelkranzes 12 kann auch eine ringfoermige Dichtung aus reibungsverminderndem Gleitmaterial vorgesehen werden, diese Gleitdichtung ist zeichnerisch nicht dargestellt.

Aufgabe des zusaetzlichen Kugelkranzes 12 oder der Gleitdichtung aus reibungsverminderndem Material ist es, einer nur beschraenkt eintretenden Axialbelastung in Oeffnungsrichtung der Bauteile, sowie der auftretenden Radialbelastung entgegenzuwirken oder diese Kraefte aufzunehmen.

Die Ausfuehrungsform gemaess Fig. 3 kann also nicht nur erhebliche Axialbelastungen in Form von Druckbelastungen aufnehmen, sondern es koennen auch wesentliche Radialbelastungen aufgenommen werden.

Obwohl in den Beispielen Lagerringe dargestellt sind, die im Querschnitt L-Form aufweisen, ist es auch Gegenstand der Erfindung, diese Teile mit anderer Formgestaltung vorzusehen, Formgestalt, die vom Einsatz des Lagers vorgegeben wird.

Wesentlich fuer die Erfindung ist es, dass die beiden Lagerringe einstueckig aus gepresstem Blechen hergestellt werden und radial, sich gegenueberliegende Flansche aufweisen, und dass wenigstens ein Kugelkranz zur Kraftaufnahme in einer Radialebene zwischen den Ringen vorgesehen ist.

In der Praxis ist es moeglich, Aenderungen an den dargestellten Ausfuehrungsbeispielen vorzunehmen. Zum Beispiel koennen auch mehrere, konzentrisch zueinander angeordnete, tragende Kugelkraenze vorgesehen sein. Die aeusseren Flansche der Bleche koennten auch gleiche Abmessung aufweisen und durch ein C-foermiges, umlaufendes Profil zusammengehalten werden. Auch koennen mehrere, aus kleineren Kugeln bestehende, sich gegenueberliegende Kugelkraenze, gemaess der Fig. 3, vorgesehen werden, ohne den Erfindungsgedanken zu verlassen.

**Ansprüche**

1. Spurring, besonders zur Aufnahme von Axialkraeften, bestehend aus zwei profilierten, sich gegenueberliegenden Ringen, mit wenigstens einem zwischen den Ringen angeordneten Kugelkranz, dadurch gekennzeichnet , dass die profilierten Ringe (2, 3) aus einstueckig verformtem Blech bestehen und an ihrem, in Arbeitsstellung gegenueberliegendem Rand, einen radial in Umfangsrichtung abstehenden Flansch (4, 5) aufweisen, mit einer Nut (6, 7) zur Aufnahme eines Kugelkranzes (8), wobei die Nuten (6, 7) in Arbeitslage der Ringe (2, 3) sich gegenueberliegend angeordnet sind, und dass Mittel (9) zum formschluessigen Verbinden der freien Raender der Flansche (4, 5) vorgesehen sind.

2. Spurring, nach Patentanspruch 1, dadurch gekennzeichnet , dass die Mittel zur formschluessigen Verbindung der Ringe (2, 3) aus einer Boerdelung (9) des Randes eines Flansches (4) um den Rand des gegenueberliegenden Flansches (5) gebildet sind.

3. Spurring, nach Patentanspruch 1, dadurch gekennzeichnet , dass die Mittel zur formschluessigen Verbindung der Ringe (2, 3) des Spurringes (1) aus einer Boerdelung des inneren Randes eines Flansches (4) um den inneren Rand des gegenueberliegenden Flansches (5), unter Zwischenschaltung von Waelzkoerpern (12), gebildet sind.

4. Spurring, nach Patentanspruch 3, dadurch gekennzeichnet , dass die Waelzkoerper (12) aus einem Kugelkranz bestehen.

5. Spurring, nach Patentanspruch 3, dadurch gekennzeichnet , dass die Waelzkoerper (12) von einer Dichtung aus reibungsverminderndem Material gebildet sind.

6. Spurring, nach Patentanspruch 1, dadurch gekennzeichnet , dass mehrere, konzentrisch zueinander angeordnete Kugelkraenze (8) vorgesehen sind.

7. Spurring, nach Patentanspruch 1, dadurch gekennzeichnet , dass ein Dichtungsmittel (10) zum Abschliessen des Schmiermittelspaltes (11) zwischen den radial angeordneten, sich gegenueberliegenden Flanschen (4, 5), vorgesehen ist.

FIG. 1

FIG. 2

FIG. 3